# EUROPÄISCHE PATENTANMELDUNG

(11) **EP 4 686 678 A1**
(43) Veröffentlichungstag der Anmeldung: **04.02.2026**
(21) Anmeldenummer: 24192692.2
(22) Anmeldetag: 02.08.2024
(51) Int. Cl.: B65G 54/02, B25J 21/00, H02K 41/03

(54) **KONTROLLIERTE UMGEBUNG MIT EINER TRANSPORTVORRICHTUNG, VERWENDUNG VON SPANNMITTELN, VERWENDUNG WENIGSTENS EINES DICHTELEMENTS, VERWENDUNG EINER TRANSPORTEINHEIT**

(71) Anmelder: TT Innovation AG, 6343 Rotkreuz (CH)
(72) Erfinder: Joschi Geiser, Christoph, 4103 Bottmingen (CH)
(74) Vertreter: Mertzlufft-Paufler, Cornelius

(57) **Zusammenfassung**

Die Erfindung schlägt somit bei einer kontrollierten Umgebung (1) vor, benachbarte Antriebsmodule (5) einer Transportvorrichtung (4) der kontrollierten Umgebung (1) in einem Dichtbereich (12) gegeneinander abzudichten, so dass Partikel und/oder Verunreinigungen, insbesondere mikrobiologische Verunreinigungen, von außen nicht in die kontrollierte Umgebung (1) gelangen, wobei jedes Antriebsmodul (5) zu einer Levitation (6) wenigstens einer Transporteinheit (7), insbesondere Mover (8), eingerichtet und eine Kopplungsseite (9) des Antriebsmoduls (5) von einem Versiegelungselement (10) weitestgehend abgedeckt ist (Fig. 1) .

## Beschreibung

Die Erfindung betrifft eine kontrollierte Umgebung, insbesondere Containment oder Isolator, mit einer Transportvorrichtung, die wenigstens zwei Antriebsmodule in einer Anordnung aufweist, wobei jedes Antriebsmodul zu einer magnetischen Levitation zumindest einer Transporteinheit eingerichtet ist.

Die Erfindung betrifft weiter eine Verwendung von Spannmitteln zum kraft- und/oder formschlüssigen Verbinden der Antriebsmodule, insbesondere wobei der Dichtbereich komprimiert wird.

Die Erfindung betrifft darüber hinaus eine Verwendung wenigstens eines Dichtelements in einem Dichtbereich.

Die Erfindung betrifft schließlich eine Verwendung einer Transporteinheit.

Kontrollierte Umgebungen mit einer Transportvorrichtung, auf der eine Transporteinheit verfahrbaren werden können, sind aus der Praxis bekannt. Ferner sind levitierbare Transporteinheiten aus der Praxis bekannt und werden beispielsweise eingesetzt, um eine Nutzlast in magnetisch kontrollierter Weise durch ein Spulenfeld und/oder durch eine permanent-magnetische Anordnung, das oder die in einer Antriebsfläche angeordnet sein kann/können, zu bewegen und/oder zu halten
Der Erfindung liegt die Aufgabe zugrunde, die Gefahr einer Kontamination der kontrollierten Umgebung durch Partikel und/oder Verunreinigungen, insbesondere mikrobiologischen Verunreinigungen, die durch Spalte zwischen benachbarten Antriebsmodulen von außen in die kontrollierte Umgebung gelangen können, zu reduzieren und ein Spulenfeld und/oder eine permanent-magnetische Anordnung der Antriebsfläche vor Einflüssen aus der kontrollierten Umgebung zu schützen, wie beispielsweise Dekontaminationsmittel (beispielsweise Wasserstoffperoxid (H2O2)) und/oder Reinigungsmittel.

Zur Lösung der genannten Aufgabe sind erfindungsgemäß die Merkmale des Anspruchs 1 vorgesehen. Insbesondere wird somit zur Lösung der genannten Aufgabe bei einer kontrollierten Umgebung der eingangs beschriebenen Art erfindungsgemäß vorgeschlagen, dass jedes Antriebsmodul auf einer Kopplungsseite mit einem Versiegelungselement abgedeckt ist und dass benachbarte Antriebsmodule in einem Dichtbereich gegeneinander abdichten.

Als Transportvorrichtung kann dabei jede Komponente der kontrollierten Umgebung verstanden werden, die die Levitation und/oder eine Bewegung der Transporteinheit, beispielsweise ein Mover, bewirkt und/oder dazu beiträgt. Zur Transportvorrichtung zählt demnach auch eine Antriebsfläche. Die Antriebsfläche ist wiederum durch die Kopplungsseite gekennzeichnet, über die eine magnetische Wechselwirkung beziehungsweise Kopplung zwischen Transporteinheit und Transportvorrichtung über einen Levitationserzeuger bewirkt werden kann.

Der Begriff der Levitation kann hierbei beispielsweise dadurch charakterisierbar sein, dass die mit wenigstens einem Permanentmagneten oder Elektromagneten ausgerüstete oder anderweitig magnetisch aktive Transporteinheit in einem kontrolliert geformten Magnetfeld, bewirkt durch den Levitationserzeuger der Transportvorrichtung, schwebt und/oder durch gesteuerte Veränderung des Magnetfelds bewegt wird.

Als Antriebsmodul kann insbesondere jede kleinste, individuell betreibbare Einheit zur Levitationserzeugung verstanden werden. Somit besteht der Levitationserzeuger aus wenigstens einem Antriebsmodul oder mehreren Antriebsmodulen der Transportvorrichtung. Der Levitationserzeuger, und somit beispielsweise das wenigstens eine Antriebsmodul, kann beispielsweise mit Mitteln zur Erzeugung eines Spulenfelds und/oder mit einer permanentmagnetischen Anordnung ausgebildet sein.

Das Versiegelungselement kann wiederum von einer, insbesondere magnetisch neutralen, Trennschicht gebildet sein, die, wie weiter und näher beschrieben und beansprucht, zumindest teilweise auf wenigstens ein Antriebsmodul aufgelegt und/oder aufgebracht ist. Magnetisch neutral im Sinne der Erfindung kann bedeuten, dass durch die verwendeten Materialien eine Störung oder Beeinträchtigung der magnetischen Kopplung zwischen der Transportvorrichtung, insbesondere der Kopplungsseite, und der Transporteinheit gemindert oder vermieden werden kann, insbesondere derart, dass eine Regelung der Levitation nicht so gestört wird, dass die Levitation abbricht. Besonders vorteilhaft kann somit eine ungestörte magnetische Kopplung über die Kopplungsseite realisiert werden.

Ferner kann das Versiegelungselement eine Trennung zwischen den Antriebsmodulen und der kontrollierten Umgebung bilden, wodurch vorteilhafterweise erreicht werden kann, dass die Gefahr einer Kontamination durch Partikel und/oder Verunreinigungen, insbesondere mikrobiologische Verunreinigungen, reduziert werden kann.

Der Dichtbereich wiederum, in welchem die wenigstens zwei benachbarten Antriebsmodule gegeneinander abdichten, bewirkt vorteilhafterweise zusätzlich, dass keine Partikel und/oder Verunreinigungen, insbesondere mikrobiologischen Verunreinigungen, in einen Zwischenbereich der benachbarten Antriebsmodule gelangt. Selbst wenn in den Zwischenbereich Partikel und/oder Verunreinigungen gelangen, kann durch den Dichtbereich verhindert werden, dass diese in ein Inneres der kontrollierten Umgebung, insbesondere des Containments oder des Isolators, gelangen.

Eine kontrollierte Umgebung kann beispielsweise als ein begrenzter Raumbereich charakterisierbar sein, in welchem definierte Umgebungsbedingungen, insbesondere in Bezug auf eine Luftreinheit und/oder eine Oberflächenreinheit, schaffbar und/oder aufrechterhaltbar sind, beispielsweise durch eine Kontrolle eines Luftaustausches mit einer Außenwelt der kontrollierten Umgebung. Die Kontrolle des Luftaustausches kann beispielsweise durch einen völligen Ausschluss des Luftaustausches im Normalbetrieb (beispielsweise bis auf eine geschlossene Luftzirkulation) oder eine konsequente Vorgabe einer Richtung des Luftaustausches (in die kontrollierte Umgebung oder aus der kontrollierten Umgebung) realisiert sein. Beispiele kontrollierter Umgebungen sind Isolatoren, Restricted Access Barrier Systems (zugangsbeschränkte Barrierensystems, insbesondere vom offenen oder geschlossenen Typ), Containments, Gloveboxes.

Innerhalb der kontrollierten Umgebung, insbesondere des Containments oder des Isolators, können somit verschiedene Prozesse zur Verarbeitung verschiedenster Erzeugnisse, beispielsweise pharmazeutischer Erzeugnisse, erfolgen, wobei die Gefahr einer Kontamination wenigstens eines Erzeugnisses durch Partikel und/oder Verunreinigungen von außerhalb der kontrollierten Umgebung dezimiert werden kann. Solche pharmazeutischen Erzeugnisse können beispielsweise jeweils einen pharmazeutischen Behälter zu einer Aufnahme eines pharmazeutischen Präparats aufweisen. Eine Liste von Beispielen solcher pharmazeutischen Behälter umfasst zumindest Vials, Spritzen, Karpulen und sonstige befüllbare pharmazeutische Behälter.

Unter der Begrifflichkeit "abdichten" kann somit beispielsweise ein fluidisches Abdichten verstanden werden, sodass keinerlei Fluide, beispielsweise Gas, insbesondere Luft, die beispielsweise die Partikel und/oder Verunreinigungen beinhaltet/beinhalten, von dem Zwischenbereich der benachbarten Antriebsmodule durch den Dichtbereich in die kontrollierte Umgebung gelangen.

Ein weiterer Vorteil zur Reduzierung von Kontaminationen kann dadurch erreicht werden, dass das Versiegelungselement die Antriebsmodule und somit zusätzlich auch den Dichtbereich abdeckt, sodass eine doppelte Abdichtbarkeit erreicht werden kann. Selbst wenn Verunreinigungen, beispielsweise von außerhalb der kontrollierten Umgebung, durch den Dichtbereich gelangen, kann durch das Versiegelungselement verhindert werden, dass diese in das Innere der kontrollierten Umgebung gelangen.

Bei einer weiteren vorteilhaften Ausgestaltung kann vorgesehen sein, dass der Dichtbereich wenigstens ein Dichtelement aufweist.

Das Dichtelement kann dabei beispielsweise einen, beispielsweise den bereits erwähnten, Zwischenbereich der angrenzenden Antriebsmodule entweder vollständig oder teilweise abdichten, insbesondere wird jedoch vorteilhafterweise der Bereich abgedichtet, der einem Inneren der kontrollierten Umgebung zugewandt ist. Besonders vorteilhaft kann somit, neben den bereits beschriebenen Vorteilen der Reduzierung der Kontaminationsgefahr der kontrollierten Umgebung erreicht werden, dass durch das breite Spektrum unterschiedlicher Dichtelemente verschiedene Abdichtungen der benachbarten Antriebsmodule in dem Dichtbereich realisiert werden können.

Hierbei kann beispielsweise vorgesehen sein, dass das Dichtelement wenigstens ein Antriebsmodul, vorzugsweise die zwei Antriebsmodule, kontaktiert, sodass der Dichtbereich geschlossen werden kann. Ferner kann beispielsweise vorgesehen sein, dass das Dichtelement wenigstens ein Versiegelungselement und/oder wenigstens ein Versiegelungselement und ein Antriebsmodul kontaktiert.

Bei einer weiteren vorteilhaften Ausgestaltung der Erfindung kann vorgesehen sein, dass der Dichtbereich aus oder mit einem H2O2-resistenten Material ausgebildet ist.

Wasserstoffperoxid (H2O2) ist ein wichtiger Bestandteil der hierin beschriebenen kontrollierten Umgebung, da die kontrollierte Umgebung, insbesondere das Containment oder der Isolator, mittels Wasserstoffperoxid vor dem oder einem innerhalb der kontrollierten Umgebung durchzuführenden Prozess über einen Dekontaminationszyklus dekontaminiert wird. Hierfür wird die kontrollierte Umgebung mit Wasserstoffperoxid durchströmt, wodurch erreicht wird, dass sämtliche Partikel und/oder Verunreinigungen, insbesondere mikrobiologische Verunreinigungen, innerhalb der kontrollierten Umgebung biologisch deaktiviert werden können. Da auch der Dichtbereich vor dem oder einem innerhalb der kontrollierten Umgebung durchzuführenden Prozess mittels Wasserstoffperoxid dekontaminiert, ist es wichtig, dass der Dichtbereich aus oder zumindest mit einem H2O2-resistenten Material ausgebildet ist, damit sichergestellt werden kann, dass das Material während des Dekontaminationszyklus keinerlei Schaden nimmt.

Vorteilhafterweise kann somit eine Langlebigkeit des Materials des Dichtbereichs über eine Vielzahl von Dekontaminationszyklen und somit eine stetig gute Abdichtbarkeit der benachbarten Antriebsmodule im Dichtbereich erreicht werden.

Alternativ oder zusätzlich kann vorgesehen sein, dass das Versiegelungselement aus oder mit einem H2O2-resistenten Material ausgebildet ist.

Da das Versiegelungselement ebenfalls vor dem oder einem innerhalb der kontrollierten Umgebung durchzuführenden Prozess über den oder einen Dekontaminationszyklus dekontaminiert werden muss, um zu verhindern, dass-Verunreinigungen, insbesondere mikrobiologische Verunreinigungen, das oder ein zu prozessierendes Erzeugnis kontaminiert, ist es besonders vorteilhaft, wenn das Versiegelungselement gegen das verwendete Dekontaminationsmittel, hier ebenfalls Wasserstoffperoxid, resistent ausgebildet ist. Auch hier kann dadurch vorteilhafterweise eine Langlebigkeit des Versiegelungselement erreicht werden.

Zur Reinigung und Dekontamination der kontrollierten Umgebung sind eine Vielzahl von Produkten einsetzbar und es sind auch Kombinationen denkbar. So werden beispielsweise Isolatoren oft in mehreren Schritten und mit unterschiedlichen Reinigungs- und/oder Dekontaminationsmitteln behandelt. Beispielsweise werden Wasserstoffperoxid (H2O2), Isopropanol, Ethylen Oxid und weitere Mittel eingesetzt.

Das Versiegelungselement und/oder der Dichtbereich kann beispielsweise aus einem Edelstahl- und/oder einem Glas gefertigt sein oder ein solches Material umfassen. Alternativ oder zusätzlich kann vorgesehen sein, dass das Versiegelungselement und/oder der Dichtbereich aus einem Kunststoff, beispielsweise einem Kautschuk und/oder einem Verbundwerkstoff besteht. Es kann als starre oder flexible, insbesondere folienartige Schicht eingesetzt werden.

Allgemein kann auch vorgesehen sein, dass der Dichtbereich und/oder das Versiegelungselement aus einem Material gefertigt oder ausgebildet ist, das resistent gegenüber verschiedener weiterer Dekontaminationsmittel ist.

Bei einer weiteren vorteilhaften Ausgestaltung kann vorgesehen sein, dass das Versiegelungselement aus einem nicht ausgasenden Material, insbesondere einem nicht H2O2-ausgasenden Material, besteht.

Als "nicht ausgasend" kann verstanden werden, dass eine Porengröße des Materials derart gewählt ist, dass beispielsweise entweder erst gar kein Gas, insbesondere Wasserstoffperoxid, aufgenommen werden kann oder aber, falls ein Gas, insbesondere Wasserstoffperoxid, dennoch von dem Material aufgenommen wurde, dieses nicht wieder an die Umgebung abgibt. Somit kann vorteilhafterweise verhindert werden, dass durch das Versiegelungselement während des oder eines innerhalb der kontrollierten Umgebung durchgeführten Prozesses ein von dem Material aufgenommenes Gas, insbesondere Wasserstoffperoxid, abgegeben wird. Die Abgabe von Gasen, insbesondere Wasserstoffperoxid, des Materials während einer Verarbeitung des oder eines, insbesondere pharmazeutischen, Erzeugnisses kann zu einer Kontamination dessen führen und sollte demnach verhindert werden.

Alternativ oder zusätzlich kann vorgesehen sein, dass der Dichtbereich aus einem nicht ausgasenden Material, insbesondere einem nicht H2O2-ausgasenden Material, besteht.

Hierdurch lassen sich die bereits beschriebenen Vorteile erreichen, die erreicht werden können, wenn das Versiegelungselement aus einem nicht ausgasenden Material, insbesondere einem nicht H2O2-ausgasenden Material, besteht.

Dabei kann beispielsweise vorgesehen sein, dass das Versiegelungselement und der Dichtbereich von demselben Material gebildet sind.

Bei einer weiteren vorteilhaften Ausgestaltung der Erfindung kann vorgesehen sein, dass der Dichtbereich einstückig an dem Versiegelungselement ausgebildet ist.

Der Dichtbereich kann dabei beispielsweise das oder ein, beispielsweise das bereits erwähnte und beanspruchte, Dichtelement aufweisen, welches insbesondere mit dem Versiegelungselement einstückig verbunden ist/wird. Dies kann beispielsweise dadurch erreicht werden, dass das Dichtelement mit dem Versiegelungselement stoffschlüssig verbunden wird. Beispielsweise kann das Versiegelungselement mit dem Dichtelement verklebt oder verschweißt werden. Ferner kann beispielsweise vorgesehen sein, dass der Dichtbereich durch zwei einstückig miteinander verbundene Versiegelungselemente abdichtbar ist. Alternativ oder zusätzlich kann vorgesehen sein, dass das Versiegelungselement und das Material des Dichtbereichs einen Verbundwerkstoff bilden.

Besonders vorteilhaft kann somit beispielsweise erreicht werden, dass somit kein getrennter Übergangsbereich von Dichtbereich und Versiegelungselement besteht, über den eine Kontamination erfolgen könnte.

Bei einer weiteren vorteilhaften Ausgestaltung der Erfindung kann vorgesehen sein, dass der Dichtbereich wenigstens zwei Versiegelungselemente, vorzugsweise maschenartig, miteinander verbindet. Eine maschenartige Verbindung kann beispielsweise dadurch charakterisierbar sein, dass der Dichtbereich wenigstens ein Loch aufweist, in welches beispielsweise ein Antriebsmodul einsetzbar ist. Eine menschenartige Form der Dichtung kann insbesondere durch den Einsatz von Silikon zur Abdichtung erzeugt werden.

Dabei kann beispielsweise vorgesehen sein, dass der Dichtbereich ein, beispielsweise das bereits erwähnte, Dichtelement aufweist, welches wiederum auf einer Seite mit dem ersten Versiegelungselement, das beispielsweise ein erstes der zwei Antriebsmodule bedeckt, und auf einer anderen Seite mit dem zweiten Versiegelungselement, das insbesondere ein zweites der zwei Antriebsmodule bedeckt, vorzugsweise form- und/oder kraftschlüssig, verbunden ist. Besonders vorteilhaft kann hierdurch ein direkter Übergang von Dichtbereich und Versiegelungselement zur verbesserten Abdichtbarkeit des Dichtbereichs erreicht werden.

Weiterhin kann beispielsweise vorgesehen sein, dass die zwei Versiegelungselemente ohne ein, beispielsweise das bereits erwähnte, Dichtelement über den Dichtbereich miteinander verbunden sind, beispielsweise form- und/oder kraftschlüssig. Besonders vorteilhaft kann hierbei auf ein zusätzliches abdichtendes Element im Dichtbereich verzichtet werden.

Vorzugsweise verbindet der Dichtbereich wenigstens vier oder eine Vielzahl von Versiegelungselementen miteinander.

Sind beispielsweise mehr als zwei benachbarte Antriebsmodule ausgebildet, können somit vorteilhafterweise auch alle weiteren Antriebsmodule im Dichtbereich gegeneinander abgedichtet werden.

Bei einer weiteren vorteilhaften Ausgestaltung kann die Erfindung vorsehen, dass benachbarte Versiegelungselemente voneinander getrennt sind.

Unter der Begrifflichkeit "getrennt" kann hierin beispielsweise verstanden werden, dass sich zwei benachbarte Versiegelungselemente nicht direkt kontaktieren. Somit kann beispielsweise erreicht werden, dass die Versiegelungselemente bei Bedarf getrennt voneinander ausgetauscht werden können. Dabei kann beispielsweise vorgesehen sein, dass die Versiegelungselemente angrenzend an das oder ein, beispielsweise das bereits beschriebene und beanspruchte Dichtelement des Dichtbereichs ausgebildet sind.

Hier kann beispielsweise vorgesehen sein, dass die Versiegelungselemente den Dichtbereich nicht tangieren, wodurch wiederum das oder ein Dichtelement ebenfalls unabhängig von den Versiegelungselementen ausgetauscht werden kann.

Ferner kann vorgesehen sein, dass die zwei Versiegelungselemente, wie bereits beschrieben und/oder beansprucht, über den Dichtbereich miteinander verbunden sind. Es ist somit eine hermetisch und/oder vollflächig und/oder spaltfreie abgedichtete Trennfläche ausbildbar.

Alternativ oder zusätzlich kann vorgesehen sein, dass der Dichtbereich einstückig mit den Versiegelungselementen ausgebildet ist. Hierdurch können bereits beschriebene Vorteile realisiert werden. Es ist somit ein Übergang von dem Dichtbereich zu jedem Versiegelungselement einfach gasdicht ausbildbar.

Bei einer weiteren vorteilhaften Ausgestaltung der Erfindung kann vorgesehen sein, dass der Dichtbereich eine Abdichtung der kontrollierten Umgebung nach außen definiert.

"Nach außen" kann dabei beispielsweise bedeuten, dass durch den Dichtbereich ein Bereich außerhalb der kontrollierten Umgebung gegen einen Bereich innerhalb der kontrollierten Umgebung abgedichtet ist.

Der Bereich außerhalb der kontrollierten Umgebung, insbesondere des Containments oder des Isolators, kann dabei beispielsweise durch eine von innerhalb der kontrollierten Umgebung differenzierten Luftqualität gekennzeichnet sein. Der Bereich innerhalb der kontrollierten Umgebung kann beispielsweise eine hochreine, sterile und/oder dekontaminierte Umgebung sein.

Besonders vorteilhaft kann somit verhindert werden, dass Partikel und/oder Verunreinigungen, insbesondere mikrobiologische Verunreinigungen, von außerhalb der kontrollierten Umgebung in das Innere der kontrollierten Umgebung gelangen können und umgekehrt. Hierdurch kann auch die Prozesssicherheit erhöht werden.

Bei einer weiteren vorteilhaften Ausgestaltung der Erfindung kann vorgesehen sein, dass wenigstens ein Antriebsmodul der Anordnung einen dichten Anschluss an eine Begrenzungswand der kontrollierten Umgebung bildet.

Die Begrenzungswand kann dabei beispielsweise eine dichte Begrenzung vom Äußeren der kontrollierten Umgebung zum Inneren der kontrollierten Umgebung definieren. Die Begrenzungswand kann dabei insbesondere horizontal und/oder vertikal und/oder schräg angeordnet sein. Dadurch, dass das Antriebsmodul der Anordnung einen dichten Anschluss an die Begrenzungswand der kontrollierten Umgebung bildet, kann eine besonders platzsparende Variante der Transportvorrichtung realisiert werden.

Dabei kann beispielsweise vorgesehen sein, dass die Begrenzungswand aus der oder einer, beispielsweise der bereits erwähnten, insbesondere magnetisch neutralen Trennschicht, die wiederum Bestandteil des Versiegelungselements sein kann, selbst gebildet ist oder diese kontaktiert.

Weist der Dichtbereich beispielsweise das oder ein, beispielsweise das bereits beschriebene und beanspruchte Dichtelement auf, kann hierbei beispielsweise vorgesehen sein, dass das Dichtelement das wenigstens eine Antriebsmodul und die Begrenzungswand kontaktiert. Ferner kann beispielsweise vorgesehen sein, dass das Dichtelement wenigstens ein Versiegelungselement, das Antriebsmodul und die Begrenzungswand kontaktiert.

Die Antriebsfläche kann generell horizontal, vertikal und/oder schräg angeordnet sein. Die darüber und/oder daran angebrachten Versiegelungs- und/oder Dichtbereiche, beispielsweise die Dichtelemente, entsprechend auch.

Bei einer weiteren vorteilhaften Ausgestaltung kann die Erfindung vorsehen, dass das Versiegelungselement die Kopplungsseite wenigstens eines Antriebsmoduls zumindest zu 60%, vorzugsweise vollständig, bedeckt.

Besonders vorteilhaft kann somit eine möglichst hohe Abdeckung des Antriebsmoduls erreicht werden.

Bei einer weiteren vorteilhaften Ausgestaltung der Erfindung kann vorgesehen sein, dass das Versiegelungselement flächig oder linienförmig ausgebildet ist.

Dabei kann beispielsweise vorgesehen sein, falls das Versiegelungselement flächig ausgebildet ist, dass mit lediglich einem Element ein großer Teil des Antriebsmoduls abgedeckt werden kann. Dies kann beispielsweise besonders einfach und effizient durch eine Folie realisiert werden, die kraft- und/oder formschlüssig auf das Antriebsmodul aufgebracht und/oder aufgelegt wird. Das Versiegelungselement kann auch flächig und um eine Kante verlaufend ausgebildet sein.

Ist das Versiegelungselement linienförmig ausgebildet, kann dies bedeuten, dass eine Längsausdehnung des Versiegelungselements geringer ist als eine Ausdehnung quer zur Längsausdehnung. Besonders vorteilhaft kann somit ein geringerer Materialverbrauch erreicht werden, indem beispielsweise einzelne oder mehrere linienförmige Versiegelungselemente nebeneinander auf das Antriebsmodul aufgebracht und/oder aufgelegt werden. Somit können beispielsweise auch komplexere Formen, beispielsweise Kreuze, ausgebildet und/oder verbleibende Spalte abgedichtet werden.

Alternativ oder zusätzlich kann vorgesehen sein, dass der Dichtbereich flächig oder linienförmig ausgebildet ist.

Unter einem flächigen Dichtbereich kann beispielsweise verstanden werden, dass der oder ein Zwischenbereich der benachbarten Antriebsmodule von einem flächigen Element, beispielsweise dem oder einem, insbesondere dem bereits erwähnten und beanspruchten, Dichtelement abgedichtet wird. Besonders vorteilhaft kann der Dichtbereich somit über eine größere Fläche definiert werden, wodurch wiederum die Gefahr einer Kontamination verringert werden kann. Ein flächiger Dichtbereich kann beispielsweise dadurch charakterisierbar, dass eine Ausdehnung in einer Dimension wesentlich kleiner (beispielsweise um mindestens eine Größenordnung kleiner) als eine Ausdehnung in den beiden verbliebenden Dimensionen ist.

Unter einem linienförmigen Dichtbereich kann verstanden werden, dass nur der Bereich der benachbarten Antriebsmodule durch ein linienförmiges Element, beispielsweise durch das oder ein, insbesondere das bereits erwähnte und beanspruchte Dichtelement, abgedichtet wird, an dem der oder ein linienförmiger Zwischenbereich zwischen den benachbarten Antriebsmodulen gebildet und an dem die Gefahr einer Kontamination durch ein Eindringen von Partikeln und/oder Verunreinigungen von außen am größten ist. Ein linienförmiger Dichtbereich kann beispielsweise dadurch charakterisierbar, dass eine Ausdehnung in einer Dimension wesentlich größer (beispielsweise um mindestens eine Größenordnung größer) als eine Ausdehnung in den beiden verbliebenden Dimensionen ist. Ein linienförmiger Dichtbereich kann vorteilhaft durch das Aufbringen / Abdichten mit Silikon erreicht werden.

Bei einer weiteren vorteilhaften Ausgestaltung der Erfindung kann vorgesehen sein, dass der Dichtbereich entlang eines Randes des Versiegelungselements geschlossen umlaufend ausgebildet ist.

Dabei kann beispielsweise vorgesehen sein, dass der Dichtbereich ein Dichtelement, insbesondere das bereits erwähnte und beanspruchte Dichtelement, aufweist und dass der Dichtbereich (beispielsweise das Dichtelement) entlang jedes Randes des Versiegelungselements geschlossen umlaufend ausgebildet ist. Besonders vorteilhaft kann somit direkt im Anschluss an das Versiegelungselement abgedichtet werden. Ferner kann vorgesehen sein, dass der Dichtbereich das gesamte Antriebsmodul umfasst, außer an der Stelle, an der das Antriebsmodul von dem Versiegelungselement abgedeckt ist. Weist der Dichtbereich vorzugsweise ein, beispielsweise das bereits erwähnte, Dichtelement auf, kann somit auch vorgesehen sein, dass das Dichtelement zunächst an jedem Rand des Versiegelungselements ausgebildet ist und zudem das gesamte, von dem Versiegelungselement nicht abgedeckte Antriebsmodul, umhüllt, um eine Kontaminationsgefahr weiter zu reduzieren.

Bei einer weiteren vorteilhaften Ausgestaltung der Erfindung kann vorgesehen sein, dass der Dichtbereich wenigstens eine, beispielsweise die bereits erwähnte, Begrenzungswand und/oder einen Anschluss an eine Prozessstation kontaktiert. Somit ist eine komplette Wand einer kontrollierten Umgebung als Antriebsfläche gestaltbar und/oder ein abdichtbarer Zugang an die Prozessstation über den Anschluss ermöglicht.

Die Begrenzungswand kann dabei beispielsweise von der bereits beschriebenen Begrenzungswand gebildet sein. Besonders vorteilhaft kann somit eine Stabile Abdichtung nicht nur zwischen den benachbarten Antriebsmodulen, sondern auch gegen die Begrenzungswand erreicht werden.

Bei einer weiteren vorteilhaften Ausgestaltung der Erfindung kann vorgesehen sein, dass der Dichtbereich die Anordnung von Antriebsmodulen umlaufend umschließt und gegen die oder eine Begrenzungswand abdichtet.

Als Anordnung von Antriebsmodulen kann, wie im Oberbegriff des Anspruchs 1 bereits eingeführt, beispielsweise die Gesamtheit mindestens zweier Antriebsmodule verstanden werden. Umschließt der Dichtbereich die Anordnung und somit eines oder mehrere Antriebsmodule und dichtet zudem gegen die Begrenzungswand, beispielsweise die bereits beschriebene Begrenzungswand, ab, kann vorteilhafterweise erreicht werden, dass alle weiteren Spalte des Antriebsmoduls, die nicht direkt dem Inneren der kontrollierten Umgebung zugewandt sind und jedoch dennoch kontaminiert werden können, abdichtbar sind.

Bei einer weiteren vorteilhaften Ausgestaltung der Erfindung kann vorgesehen sein, dass der Dichtbereich wenigstens ein Versiegelungselement kontaktiert.

Dabei kann beispielsweise vorgesehen sein, dass der Dichtbereich ein Dichtelement, beispielsweise das bereits beschriebene und beanspruchte Dichtelement aufweist, welches wiederum mit wenigstens einem Versiegelungselement in Kontakt steht. Besonders vorteilhaft kann hierdurch ein lückenloser Übergang zwischen Versiegelungselement und Dichtbereich, beziehungsweise Dichtelement, erreicht werden.

Dabei kann beispielsweise vorgesehen sein, dass das Versiegelungselement mit dem Dichtelement kraft- und/oder formschlüssig verbunden ist. Somit sind besonders wirkungsvolle Abdichtungen erreichbar.

Bei einer weiteren vorteilhaften Ausgestaltung der Erfindung kann vorgesehen sein, dass das Versiegelungselement unlösbar mit dem Antriebsmodul verbunden ist.

Unter der Begrifflichkeit "unlösbar" kann beispielsweise verstanden werden, dass das Versiegelungselement nicht zerstörungsfrei von dem Antriebsmodul entfernt werden kann. Somit kann ein unbeabsichtigtes oder unkontrolliertes Lösen des Versiegelungselements verhindert werden. Ferner kann erreicht werden, dass das Versiegelungselement, sobald dies initial korrekt auf das Antriebsmodul aufgebracht ist, nicht verrutscht oder Wellen schlägt.

Es kann jedoch auch vorteilhaft sein, wenn das Versiegelungselement lösbar mit dem Antriebsmodul verbunden ist, da hierdurch eine Austauschbarkeit des Versiegelungselements ermöglicht ist.

Alternativ oder zusätzlich kann vorgesehen sein, dass das Versiegelungselement stoffschlüssig mit dem Antriebsmodul verbunden ist.

Dabei kann beispielsweise vorgesehen sein, dass das Versiegelungselement beispielsweise von der oder einer, beispielsweise der bereits erwähnten, Folie gebildet ist, welche stoffschlüssig mit dem Antriebsmodul verbunden wird. Darunter kann beispielsweise verstanden werden, dass das Versiegelungselement, beispielsweise die Folie, auf das Antriebsmodul aufgeklebt wird. Auch weitere stoffschlüssige Verbindungsformen sind möglich.

Bei einer weiteren vorteilhaften Ausgestaltung der Erfindung kann vorgesehen sein, dass das Versiegelungselement flexibel ausgebildet ist.

Unter flexibel kann verstanden werden, dass sich das Versiegelungselement beispielsweise vorteilhaft an einen Untergrund, beispielsweise das Antriebsmodul, anpasst oder daran anpassbar, beispielsweise auch dehnbar, ist. Dies kann wiederum durch die bereits beschriebene Folie erreicht werden. Hierdurch kann beispielsweise auch ein zerstörungsfreies Lösen des Versiegelungselements von dem Antriebsmodul erreicht werden.

Bei einer weiteren vorteilhaften Ausgestaltung der Erfindung kann vorgesehen sein, dass das Versiegelungselement um eine Kante des Antriebsmoduls oder um alle die Kopplungsseite berandenden Kanten geführt ist.

Die Kante des Antriebsmoduls oder alle die Kopplungsseite berandenden Kanten bilden eine kritische Schnittstelle für Partikel und/oder Verunreinigungen, insbesondere mikrobiologische Verunreinigungen, die über diese Bereiche in den Innenraum der kontrollierten Umgebung gelangen können. Somit ist besonders vorteilhaft, dass das Versiegelungselement um wenigstens eine Kante des Antriebsmoduls oder um alle die Kopplungsseite berandenden Kanten geführt ist, da hierdurch eine zusätzliche Abdichtbarkeit realisiert werden kann. Dabei kann beispielsweise auch vorgesehen sein, dass zwei Versiegelungselemente um die Kanten von zwei Antriebsmodulen geführt sind und dass sich diese Versiegelungselemente im Dichtbereich kontaktieren. Ferner kann vorgesehen sein, dass zwei Versiegelungselemente um die Kanten von zwei Antriebsmodulen geführt sind und dass diese im Dichtbereich mit dem oder einem Dichtelement, beispielsweise dem bereits beschriebenen Dichtelement, verbunden sind. Hierdurch kann eine hohe Abdichtbarkeit der benachbarten Antriebsmodule erreicht werden.

Bei einer weiteren vorteilhaften Ausgestaltung der Erfindung kann vorgesehen sein, dass das Versiegelungselement starr ist.

Starr kann dabei beispielsweise bedeuten, dass das Versiegelungselement zwar bis zu einem gewissen Maß biegsam und somit duktil, jedoch auch plastisch verformbar ist. Dabei kann beispielsweise auch vorgesehen sein, dass das Material des Versiegelungselements starr ist und derart auf dem Antriebsmodul aufgelegt und/oder aufgebracht ist, dass sich dieses unter thermischer Belastung spannungsfrei ausdehnen kann. Vorteilhaft ist jedoch, wenn das Versiegelungselement über verschiedene Temperaturniveaus, die während des oder eines Prozesses in der kontrollierten Umgebung herrschen können, thermisch stabil ist, sodass eine thermische Ausdehnung erst gar nicht erfolgt und das Versiegelungselement somit auf wenigstens einem Antriebsmodul fixiert werden kann.

Dies kann beispielsweise durch eine Edelstahl-, eine Kunststoff- und/oder eine Glasschicht und/oder eine Folie und/oder ein Verbundwerkstoff erreicht werden. Besonders vorteilhaft kann hierdurch verhindert werden, dass das Versiegelungselement verrutscht und/oder Falten schlägt, wodurch wiederum Zwischenräume entstehen, die kritisch für Kontaminationen sein können.

Eine beschriebene thermische Stabilität kann ebenso für den Dichtbereich gelten.

Bei einer weiteren vorteilhaften Ausgestaltung der Erfindung kann vorgesehen sein, dass das Versiegelungselement, zumindest entlang einer Seite, über das Antriebsmodul hinausragt.

Dabei kann beispielsweise vorgesehen sein, dass das Versiegelungselement über das Antriebsmodul hinaus- und in den Dichtbereich hineinragt. Somit sind Lücken zwischen den Antriebsmodulen überbrückbar.

Dabei kann beispielsweise vorgesehen sein, dass zwei Versiegelungselemente über das jeweilige Antriebsmodul hinausragen und sich im Dichtbereich kontaktieren. Der Grad eines Hinausragens kann hierbei unterschiedliche gewählt sein und beispielsweise eine Materialdicke des Dichtbereichs oder ein Vielfaches davon sein.

Ferner kann beispielsweise vorgesehen sein, dass zwei Versiegelungselemente über das jeweilige Antriebsmodul hinausragen und hierbei einen Übergang zum Dichtbereich bilden. Hierbei kann das oder ein Dichtelement im Dichtbereich ausgebildet sein, welches das oder die Versiegelungselemente vorteilhafterweise zum Abdichten der benachbarten Antriebsmodule kontaktiert.

Hierdurch können vorteilhafterweise verschiedene Möglichkeiten zum Abdichten der benachbarten Antriebsmodule im Dichtbereich realisiert werden.

Bei einer weiteren vorteilhaften Ausgestaltung der Erfindung kann vorgesehen sein, dass die zwei Antriebsmodule nicht weiter voneinander entfernt ausgebildet sind, als dass die darauf betriebene Transporteinheit übergangslos levitierbar und/oder verfahrbar ist.

Somit kann besonders vorteilhaft die Anzahl von Antriebsmodulen reduziert und Platz eingespart und die gesamte kontrollierte Umgebung somit kompakter konzipiert werden.

Dabei kann beispielsweise vorgesehen sein, dass genau bestimmt wird, wie weit die zwei benachbarten Antriebsmodule voneinander entfern sein dürfen, um eine lückenlose Levitation und/oder Verfahrbarkeit der Transporteinheit am Übergang von den zwei Antriebsmodulen zu ermöglichen, sodass vorteilhafterweise gewährleistet werden kann, dass die Transporteinheit beide Antriebsmodule, ohne Einbußen von Levitationseigeschaften und/oder Eigenschaften betreffend der Verfahrbarkeit, passieren kann. Unter der Begrifflichkeit "übergangslos" kann verstanden werden, dass die Transporteinheit beim Passieren der zwei benachbarten Antriebsmodule die Levitations- und/oder Verfahreigenschaften beibehält.

Bei einer weiteren vorteilhaften Ausgestaltung der Erfindung kann vorgesehen sein, dass zumindest eine Prozessstation in der kontrollierten Umgebung angeordnet ist.

Dabei kann beispielsweise vorgesehen sein, dass dicht aneinander abschließbare Versiegelungselemente und/oder Dichtbereiche zumindest teilweise eine Begrenzung zwischen der kontrollierten Umgebung und einer äußeren Umgebung darstellen, beziehungsweise bewirken.

Besonders vorteilhaft kann die Transporteinheit somit die Prozessstation anfahren und/oder mit dieser interagieren, wodurch wiederum beispielsweise pharmazeutische Erzeugnisse innerhalb der kontrollierten Umgebung prozessiert und/oder verarbeitet werden können.

Alternativ oder zusätzlich vorgesehen sein, dass zumindest ein Abschnitt der Prozessstation, insbesondere wenigstens eine Füllnadel, höher als wenigstens eines der Antriebsmodule angeordnet ist.

Unter "höher" kann dabei beispielsweise verstanden werden, dass der Abschnitt der Prozessstation, insbesondere die wenigstens eine Füllnadel, höher als eine, insbesondere laminare, Luftströmung von gefilterter Luft innerhalb der kontrollierten Umgebung angeordnet ist. Die Luftströmung bewirkt dabei, dass Partikel und/oder Verunreinigungen in eine vorbestimmte Richtung geleitet werden, um zu verhindern, dass das oder ein pharmazeutisches Erzeugnis kontaminiert wird. Besonders vorteilhaft kann hierdurch beispielsweise das "First Air"-Prinzip realisiert werden, da sichergestellt werden kann, dass die Luft nach dem Durchlaufen eines Filters nicht durch andere Komponenten, beispielsweise den Abschnitt der Prozessstation, insbesondere die Füllnadel, unterbrochen wird und/oder diese kontaktiert, sondern lediglich ein freiliegendes Produkt, beispielsweise das freiliegende pharmazeutische Erzeugnis, und/oder die dieses Erzeugnis berührenden Flächen kontaktiert. Somit kann vorteilhafterweise verhindert werden, dass Partikel und/oder Verunreinigungen des höher liegenden Abschnitts der Prozessstation, beispielsweise der Füllnadel, durch die Luftströmung auf das pharmazeutische Erzeugnis übertragen werden.

"Höher" kann somit beispielsweise in Bezug auf die Luftströmung im Sinne von stromaufwärts zu verstehen sein und/oder in Bezug auf das Schwerefeld der Erde. Beispielsweise kann der Abschnitt über einem der Antriebsmodule angeordnet sein.

Alternativ oder zusätzlich sind zur Lösung der genannten Aufgabe erfindungsgemäß die Merkmale des nebengeordneten, auf eine Verwendung gerichteten Anspruchs vorgesehen. Insbesondere wird somit zur Lösung der genannten Aufgabe eine Verwendung von Spannmitteln zum kraft- und/oder formschlüssigen Verbinden wenigstens zweier Antriebsmodule einer kontrollierten Umgebung, vorzugsweise Containments oder Isolators, insbesondere einer bereits beschriebenen und beanspruchten kontrollierten Umgebung, vorgeschlagen, insbesondere wobei der oder ein Dichtbereich komprimiert wird. Somit lassen sich die Antriebsmodule leicht auf eine definierte Position bringen. Es ist so auch einfach möglich, den Dichtbereich nach einer Anordnung der Antriebsmodule zu komprimieren, um einen dichten Abschluss zu erreichen.

Die Spannmittel können dabei besonders vorteilhaft dazu dienen, dass sich ein oder der, beispielsweise der bereits beschrieben und beanspruchte, Dichtbereich, minimieren lässt. Der Dichtbereich ist dabei der Bereich, der zur Minimierung einer Kontaminationsgefahr des Innenraums der kontrollierten Umgebung unbedingt abgedichtet werden sollte. Die Spannmittel können dabei beispielsweise von der oder einer Begrenzungswand der kontrollierten Umgebung gebildet sein, über die die Antriebsmodule fixiert werden können. Beispielsweise kann das Spannmittel auch ein verstellbarer Rahmen sein, über den die wenigstens zwei Antriebsmodule miteinander kraft- und/oder formschlüssig verspannt werden können.

Die Spannmittel können ferner insbesondere bewirken, dass ein oder das Dichtelement, beispielsweise das bereits beschriebene Dichtelement, im Dichtbereich komprimiert und somit verpresst wird.

Alternativ oder zusätzlich sind zur Lösung der genannten Aufgabe erfindungsgemäß die Merkmale des nebengeordneten, auf eine Verwendung gerichteten Anspruchs 11 vorgesehen. Insbesondere wird somit zur Lösung der genannten Aufgabe erfindungsgemäß eine Verwendung eines Dichtelements in einem Dichtbereich zu einer Abdichtung benachbarter Antriebsmodule einer, beispielsweise der bereits erwähnten, kontrollierten Umgebung gegeneinander vorgeschlagen. Somit ist eine konstruktiv einfach handhabbare Variante beschrieben, wie eine Antriebskraft auf Transporteinheiten im Inneren der kontrollierten Umgebung eingebracht werden kann, ohne einen Abschluss der kontrollierten Umgebung nach außen zu gefährden.

Bei den beschriebenen Merkmalen und/oder Komponenten kann es sich um bereits beschriebene Merkmale und/oder Komponenten handeln.

Besonders vorteilhaft können hierdurch bereits beschriebene Vorteile erreicht werden.

Alternativ oder zusätzlich sind zur Lösung der genannten Aufgabe erfindungsgemäß die Merkmale des nebengeordneten, auf eine Verwendung gerichteten Anspruchs 12 vorgesehen. Insbesondere wird somit zur Lösung der genannten Aufgabe erfindungsgemäß eine Verwendung einer Transporteinheit zum levitierten Überfahren eines ein Antriebsmodul einer, beispielsweise der bereits erwähnten, kontrollierten Umgebung abdeckenden Versiegelungselements und/oder eines, gegebenenfalls daran angrenzenden, Dichtbereichs, wobei in dem Dichtbereich benachbarte Antriebsmodule einer Transportvorrichtung der kontrollierten Umgebung gegeneinander abdichten, vorgeschlagen. Somit ist ein praktisch störungsfreier oder zumindest kontrollierter Übergang der Transporteinheiten von einem Antriebsmodul zu einem benachbarten Antriebsmodul durchführbar, insbesondere trotz der Maßnahmen zur Abdichtung der kontrollierten Umgebung nach außen.

Bei den beschriebenen Merkmalen und/oder Komponenten kann es sich um bereits beschriebene Merkmale und/oder Komponenten handeln, wodurch bereits beschriebene Vorteile realisiert werden können.

Die Erfindung wird nun anhand von Ausführungsbeispielen näher beschrieben, ist jedoch nicht auf die Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen des Ausführungsbeispiels.

Es zeigt, in jeweils stark vereinfachter, schematischer Veranschaulichung
- Fig. 1: eine zweidimensionale, schematische Darstellung (Seitenansicht im Schnitt) von vier Antriebsmodulen mit Versiegelungselementen einer kontrollierten Umgebung, einer Begrenzungswand, einer Transporteinheit und einem Dichtbereich,
- Fig. 2: eine zweidimensionale, schematische Darstellung dreier benachbarter Antriebsmodule einer kontrollierten Umgebung mit diesen abdeckenden Versiegelungselementen und an die Versiegelungselemente angrenzendem und die Versiegelungselemente kontaktierendem Dichtbereich,
- Fig. 3: eine zweidimensionale, schematische Darstellung dreier benachbarter, vertikal angeordneter Antriebsmodule einer kontrollierten Umgebung mit diesen abdeckenden Versiegelungselementen und einem Dichtbereich, wobei die Versiegelungselemente voneinander getrennt sind,
- Fig. 4: eine zweidimensionale, schematische Darstellung dreier benachbarter Antriebsmodule einer kontrollierten Umgebung mit diesen abdeckenden, linienförmigen Versiegelungselementen und flächigem Dichtbereich,
- Fig. 5: eine zweidimensionale, schematische Darstellung dreier benachbarter Antriebsmodule einer kontrollierten Umgebung mit diesen abdeckenden Versiegelungselementen, wobei die Versiegelungselemente über die Antriebsmodule hinausragen und mit dem Dichtbereich verbunden sind,
- Fig. 6: eine zweidimensionale, schematische Darstellung zweier benachbarter Antriebsmodule einer kontrollierten Umgebung mit diesen abdeckenden Versiegelungselementen und einem Dichtbereich, wobei jedes Versiegelungselement um eine Kante des jeweiligen Antriebsmoduls geführt und mit dem Dichtbereich geschlossen umlaufend ausgebildet ist,
- Fig. 7: eine zweidimensionale, schematische Darstellung zweier benachbarter Antriebsmodule einer kontrollierten Umgebung mit diesen abdeckenden Versiegelungselementen, wobei jedes Versiegelungselement um eine Kante des jeweiligen Antriebsmoduls geführt ist und sich im Dichtbereich kontaktieren.
- Fig. 8: eine zweidimensionale, schematische Darstellung einer Seitenansicht zweier sich im Dichtbereich kontaktierender Versiegelungselemente,
- Fig. 9: eine zweidimensionale, schematische Darstellung einer Draufsicht auf eine kontrollierte Umgebung mit acht Antriebsmodulen, Prozessstationen und auf den Antriebsmodulen verfahrbaren und levitierbaren Transporteinheit.

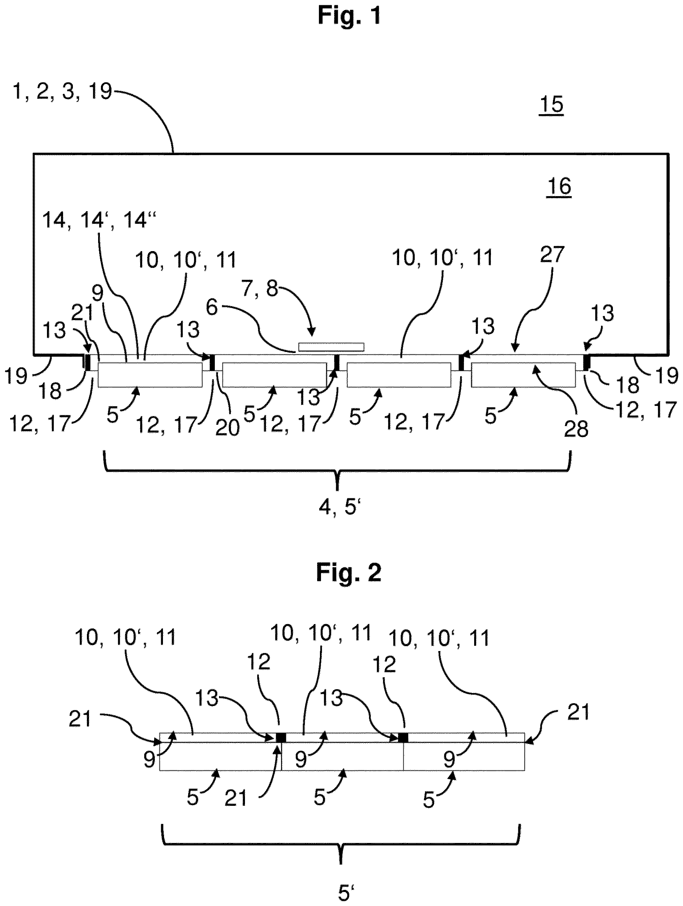

Fig. 1 zeigt eine im Ganzen mit 1 bezeichnete kontrollierte Umgebung, hier einen Isolator 2 oder ein Containment 3, mit einer Transportvorrichtung 4 in einer Seitenansicht im Querschnitt. Die Transportvorrichtung 4 weist dabei vier Antriebsmodule 5 in einer Anordnung 5' auf, wobei jedes Antriebsmodul 5 zu einer magnetischen Levitation 6 zumindest einer gezeigten Transporteinheit 7, hier eines Movers 8, eingerichtet ist.

Der Mover 8 ist dabei innerhalb der kontrollierten Umgebung 1 ausgebildet und wird von einer Kopplungsseite 9 der Antriebsmodule 5 levitiert und berührungslos bewegt. Ferner ist jedes Antriebsmodul 5 auf der Kopplungsseite 9 mit einem Versiegelungselement 10, hier einer magnetisch neutralen Trennschicht 11, die als flexible Folie 10' ausgebildet ist, vollständig, jedoch zumindest zu 60 %, abgedeckt. Eine erste Seite 27 des Versiegelungselements 10 ist dabei der kontrollierten Umgebung und eine zweite Seite 28 des Versiegelungselements 10 der Kopplungsseite zugewandt.

Jeweils benachbarte Antriebsmodule 5 sind ferner in einem Dichtbereich 12 gegeneinander abgedichtet.

In dem gezeigten Ausführungsbeispiel weist jeder Dichtbereich 12 ein Dichtelement 13 auf, in Summe sind dabei fünf Dichtbereiche 12 und fünf Dichtelemente 13 ausgebildet. Jeder Dichtbereich 12, hier jedes Dichtelement 13, und jedes Versiegelungselement 10, hier vier Versiegelungselemente 10, sind dabei aus einem Material 14, hier aus oder mit einem H2O2-resistenten Material 14' gebildet. Darüber hinaus besteht das Material 14 des Dichtbereichs 12, hier das Material 14 des Dichtelements 13, und das Material 14 des Versiegelungselements 10 aus einem nicht ausgasenden Material 14", hier aus einem nicht H2O2-ausgasenden Material 14‴.

In Fig. 1 ist weiterhin zu erkennen, dass über jeden Dichtbereich 12, hier über jedes Dichtelement 13, zwei Versiegelungselemente 10 miteinander verbunden sind.

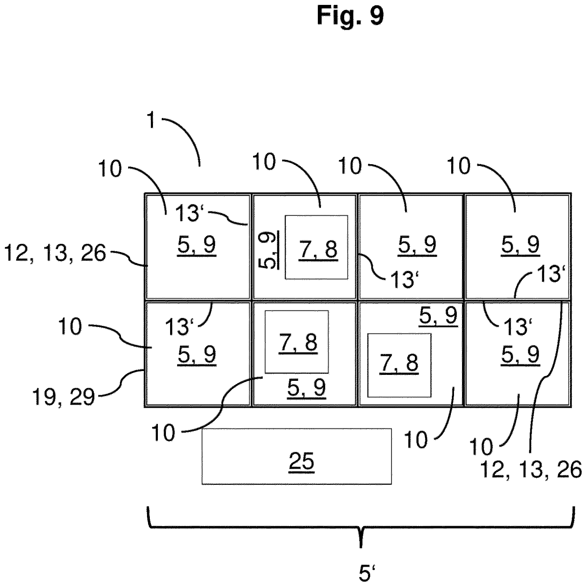

Möglich ist auch, dass der Dichtbereich 12 wenigstens vier oder eine Vielzahl von Versiegelungselementen 10 maschenartig miteinander verbindet, wie in Fig. 9 näher dargestellt.

Es kann ferner gesagt werden, dass der Dichtbereich 12 wenigstens ein Versiegelungselement 10 kontaktiert.

Weiterhin ist zu erkennen, dass jeder Dichtbereich 12, hier jedes Dichtelement 13, eine Abdichtung 17 der kontrollierten Umgebung 1 zu einer äußeren Umgebung 15 der kontrollierten Umgebung 1 definiert. Somit kann verhindert werden, dass Partikel und/oder Verunreinigungen von der äußeren Umgebung 15 in eine innere Umgebung 16 der kontrollierten Umgebung gelangen.

Es kann somit gesagt werden, dass der Dichtbereich 12 eine Abdichtung 17 der kontrollierten Umgebung 1 nach außen definiert.

Fig. 1 veranschaulicht weiter, dass jedes äußere Antriebsmodul 5 der Anordnung 5' einen dichten Anschluss 18 an eine Begrenzungswand 19 der kontrollierten Umgebung 1 bildet und dass jeder äußere Dichtbereich 12, hier jedes äußere Dichtelement 13, die Begrenzungswand 19 kontaktiert und somit den dichten Anschluss 18 abdichtet.

Im gezeigten Ausführungsbeispiel ist jedes Versiegelungselement 10 flächig und jeder Dichtbereich 12, hier jedes Dichtelement 13, linienförmig ausgebildet, sodass linienförmige Spalte 20 zwischen den benachbarten Antriebsmodulen 5 materialsparend, kostensparend und effizient abgedichtet werden können.

Die Versiegelungselemente 10, hier die Folien 10' sind im gezeigten Ausführungsbeispiel stoffschlüssig mit dem jeweiligen Antriebsmodul 5 verbunden. Dies ist dadurch realisiert, dass jedes Versiegelungselement 10 auf das jeweilige Antriebsmodul 5 aufgeklebt ist. Es kann jedoch auch sein, dass einzelne oder mehrere Versiegelungselemente 10 unlösbar oder lösbar mit dem jeweiligen Antriebsmodul 5 verbunden sind. Es kann ferner auch sein, dass das Versiegelungselement 10 hierbei als starre Komponente ausgebildet ist.

Jedes Versiegelungselement 10 eines jeden Antriebsmoduls 5 ist ferner um die jeweilige Kante 21 des Antriebsmoduls 5 geführt. Hierdurch ergibt sich zudem, dass die äußeren Versiegelungselemente 10 um alle die Kopplungsseite 9 berandenden Kanten 21 geführt sind.

Die jeweils benachbarten Antriebsmodule 5 sind darüber hinaus, wie gezeigt, nicht weiter voneinander entfernt ausgebildet, als dass die drauf betriebene Transporteinheit 7 übergangslos von einem Antriebsmodul 5 zum nächsten Antriebsmodul 5 in der kontrollierten Umgebung 1 levitierbar und verfahrbar ist.

Fig. 2 zeigt im Unterschied zum vorangegangenen Ausführungsbeispiel lediglich drei Antriebsmodule 5 in einer Anordnung 5`.

Funktionell und/oder konstruktiv zu dem vorhergehenden Ausführungsbeispiel gleichartige oder identische Bauteile und Funktionseinheiten sind mit denselben Bezugszeichen bezeichnet und nicht noch einmal gesondert beschrieben.

Auch hier weist jeder Dichtbereich 12 ein Dichtelement 13 auf.

Über zwei Dichtelemente 13 werden hierbei, im Unterschied zum vorangehenden Ausführungsbeispiel, drei Versiegelungselemente 10 miteinander verbunden, wobei auch hier jedes Versiegelungselement 10 die Kopplungsseite 9 der jeweiligen Antriebsmodule 5 abdeckt. Es kann gesagt werden, dass jedes Dichtelement 13 und somit jeder Dichtbereich 12 zwei Antriebsmodule 5 und zwei Versiegelungselemente 10 kontaktiert. Ferner kann jeder Dichtbereich 12 die hierin nicht gezeigte Begrenzungswand 19 kontaktieren.

Ferner sind die Versiegelungselemente 10 nicht um eine Kante 21 der Antriebsmodule 5 geführt, sondern schließen in etwa mit den Kanten 21 ab.

Je nachdem, wie die jeweiligen Versiegelungselemente 10 mit den jeweiligen Dichtbereichen 12 mit den Dichtelementen 13 verbunden sind, beispielsweise stoffschlüssig, kann auch gesagt werden, dass jeder Dichtbereich mit dem Dichtelement 13 einstückig an dem Versiegelungselement 10 ausgebildet ist.

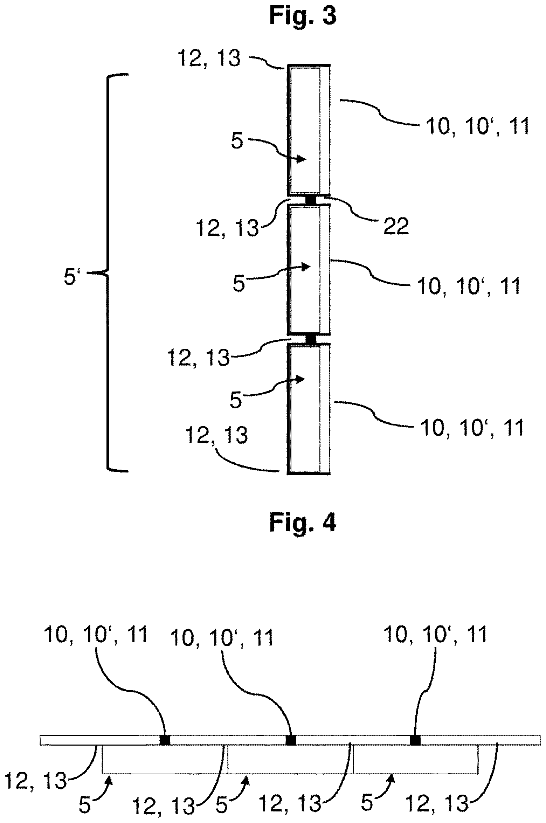

Fig. 3 zeigt im Unterschied zum Ausführungsbeispiel nach Fig. 2, eine vertikale Anordnung der Antriebsmodule 5 der Transportvorrichtung 4, wobei sich benachbarte Versiegelungselemente 10 nicht kontaktieren. Es kann somit gesagt werden, dass benachbarte Versiegelungselemente 10 voneinander getrennt sind.

Auch in diesem Ausführungsbeispiel weist jeder Dichtbereich 12 ein Dichtelement 13 auf. Der Dichtbereich 12 mit dem Dichtelement 13 ist dabei in einem Zwischenbereich 22 zwischen jeweils zwei Antriebsmodulen 5 ausgebildet und dichtet dort die benachbarten Antriebsmodule 5 ab. Ferner umschließt der Dichtbereich 12 mit dem Dichtelement 13 in diesem Ausführungsbeispiel die einzelnen Antriebsmodule 5 umlaufend und dichtet somit auch gegen die hierin nicht näher dargestellte Begrenzungswand 19 ab. Es kann somit gesagt werden, dass der Dichtbereich 12 die Anordnung 5` von Antriebsmodulen 5 umlaufend umschließt und gegen die Begrenzungswand 19 abdichtet. Die Dichtelemente 13 befinden sich in dem gezeigten Ausführungsbeispiel mittig in dem Zwischenraum 22, es ist jedoch auch denkbar, dass diese auf der Ebene der Versiegelungselemente 10 platziert sind und mit diesen abschließen. Die Dichtelemente 13 können somit auch von einer Mitte des Zwischenraums 22 versetzt sein.

Fig. 4 zeigt im Unterscheid zu den vorangehenden Ausführungsbeispielen, dass das Versiegelungselement 10 nicht mehr flächig, sondern linienförmig ausgebildet ist. Ferner ist der Dichtbereich 12 mit dem Dichtelement 13 nicht linienförmig, sondern flächig ausgebildet.

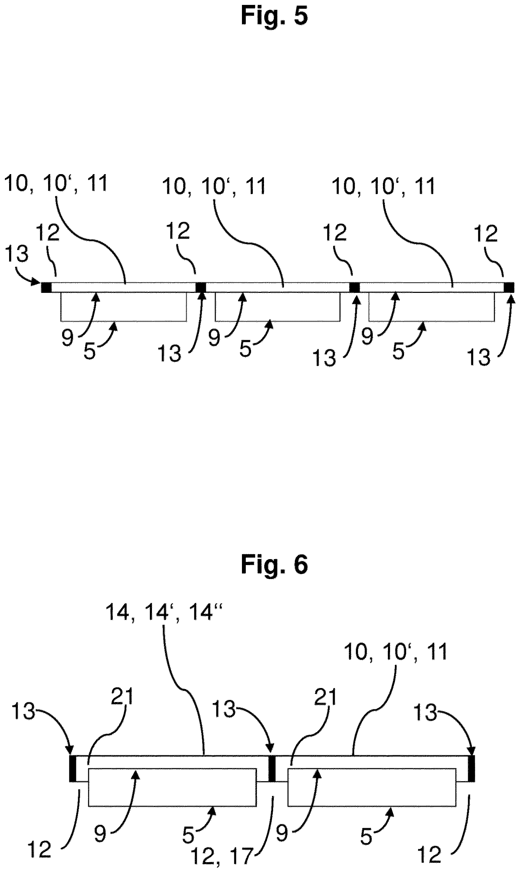

Fig. 5 zeigt im Unterschied, insbesondere zu Figur 2, dass jedes Versiegelungselement 10 entlang einer Seite, hier entlang jeder Kopplungsseite 9, über das jeweilige Antriebsmodul 5, hinausragt, und zwar derart, dass jedes Versiegelungselement 10 im Dichtbereich 12 das Dichtelement 13 kontaktiert.

Fig. 6 zeigt zwei benachbarte Antriebsmodule 5 gemäß Fig. 1. Das Versiegelungselement 10 ist dabei, wie auch in Fig. 1, flächig und um die Kante 21 jedes Antriebsmoduls 5 verlaufend ausgebildet.

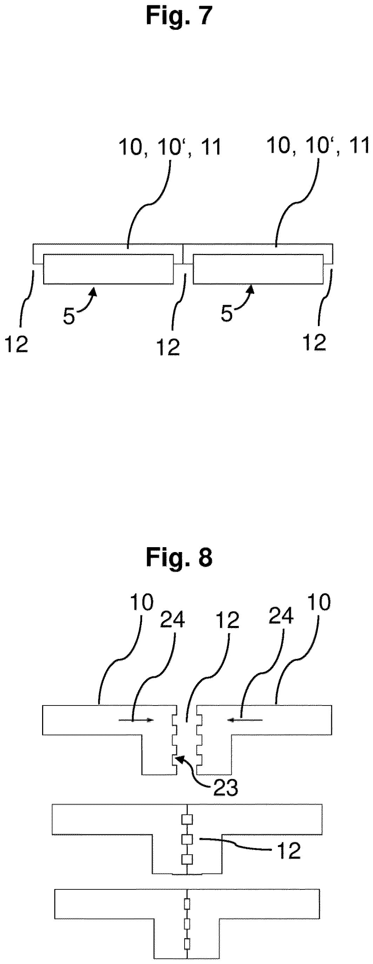

Fig. 7 zeigt im Unterschied zu den vorangehenden Ausführungsbeispiel zwei benachbarte Antriebsmodule 5, wobei auch hier jedes Antriebsmodul 5 auf der Kopplungsseite 9 mit dem Versiegelungselement 10 abgedeckt ist. Im Unterschied zu dem Ausführungsbeispiel nach Fig. 6, weist der Dichtbereich 12 kein zusätzliches, von dem Versiegelungselement 10 differenzierendes Dichtelement 13 auf. Die zwei Versiegelungselemente 10 sind vielmehr derart miteinander verbunden, beispielsweise miteinander verschweißt oder verklebt und/oder verpresst, so dass der Dichtbereich 12 der benachbarten Antriebsmodule 5 von dem Versiegelungselement 10 selbst gebildet ist. Es kann somit auch hier gesagt werden, dass der Dichtbereich 12 einstückig an dem Versiegelungselement 10 ausgebildet ist.

Fig. 8 zeigt eine Prinzipdarstellung zweier sich im Dichtbereich 12 kontaktierender, hier starrer, Versiegelungselemente 10, die dem Ausführungsbeispiel nach Fig. 7 entsprechen, wobei die Versiegelungselemente 10 im Dichtbereich 12 Aussparungen 23 haben. Durch die Verwendung von Spannmitteln (hier nicht näher dargestellt) zum kraft- und/oder formschlüssigen Verbinden der wenigstens zwei, hier nicht näher dargestellten, Antriebsmodule 5, durch Aufbringen einer Spannkraft 24, werden auch die beiden Versiegelungselemente 10 derart miteinander verpresst, dass der Dichtbereich 12 mit den Aussparungen 23 komprimiert wird. In die Aussparungen 23 kann beispielsweise auch zusätzlich das Dichtelement 13 eingelegt werden.

Fig. 9 zeigt eine Draufsicht auf die kontrollierte Umgebung 1, insbesondere der kontrollierten Umgebung gemäß des Ausführungsbeispiels nach Fig. 1. Da es sich hierbei um eine Draufsicht der kontrollierten Umgebung 1 handelt, sind neben den zu Fig. 1 bereits beschriebenen, vier nebeneinander angeordneten Antriebsmodulen 5, hierbei auch vier weitere Antriebsmodule 5 ersichtlich, die hinter den bereits beschriebenen Antriebsmodulen 5 angeordnet und somit in Fig. 1 nicht sichtbar sind. Die kontrollierte Umgebung 1 umfasst somit in diesem Ausführungsbeispiel acht benachbarte Antriebsmodule 5. In der Draufsicht ist ferner die Kopplungsseite 9 der Antriebsmodule 5 abgebildet. Des Weiteren sind drei Mover 8 erkennbar, die auf der Kopplungsseite 9 der Antriebsmodule 5 levitiert und bewegt werden. Die Mover 8 fahren dabei wenigstens eine Prozessstation 25 an.

Im gezeigten Ausführungsbeispiel ist ferner gut erkennbar, dass jeder Dichtbereich 12 ein Dichtelement 13, hier ein maschenartiges Dichtelement 13`,aufweist. Der Dichtbereich 12 mit dem Dichtelement 13 ist zudem entlang eines Randes 26 eines jeden die Kopplungsseite 9 abdeckenden Versiegelungselements 10 geschlossen umlaufend ausgebildet. Es kann ferner gesagt werden, dass der Dichtbereich 12 die Anordnung 5` von Antriebsmodulen 5 umlaufend umschließt und gegen die Begrenzungswand 19 abdichtet. Es kann zudem gesagt werden, dass der Dichtbereich 12 eine Vielzahl von Versiegelungselementen 10 maschenartig miteinander verbindet. Der Dichtbereich 12 als Ganzes ist somit maschenartig ausgebildet.

Die Erfindung schlägt somit bei einer kontrollierten Umgebung 1 vor, benachbarte Antriebsmodule 5 einer Transportvorrichtung 4 der kontrollierten Umgebung 1 in einem Dichtbereich 12 gegeneinander abzudichten, so dass Partikel und/oder Verunreinigungen, insbesondere mikrobiologische Verunreinigungen, von außen nicht in die kontrollierte Umgebung 1 gelangen, wobei jedes Antriebsmodul 5 zu einer Levitation 6 wenigstens einer Transporteinheit 7, insbesondere Mover 8, eingerichtet und eine Kopplungsseite 9 des Antriebsmoduls 5 von einem Versiegelungselement 10 weitestgehend abgedeckt ist.

### Bezugszeichenliste

- 1: kontrollierte Umgebung
- 2: Isolator
- 3: Containment
- 4: Transportvorrichtung
- 5: Antriebsmodul
- 5`: Anordnung
- 6: Levitation
- 7: Transporteinheit
- 8: Mover
- 9: Kopplungsseite
- 10: Versiegelungselement
- 10`: Folie
- 11: Trennschicht
- 12: Dichtbereich
- 13: Dichtelement
- 13`: maschenartiges Dichtelement
- 14: Material
- 14`: H2O2-resistentes Material
- 14": nicht ausgasendes Material
- 14‴: nicht H2O2-ausgasendes Material
- 15: äußere Umgebung
- 16: innere Umgebung
- 17: Abdichtung
- 18: dichter Anschluss
- 19: Begrenzungswand
- 20: Spalte
- 21: Kante
- 22: Zwischenbereich
- 23: Aussparung
- 24: Spannkraft
- 25: Prozessstation
- 26: Rand
- 27: erste Seite
- 28: zweite Seite
- 29: Masche

## Patentansprüche

1. Kontrollierte Umgebung (1), insbesondere Containment (3) oder Isolator (2), mit einer Transportvorrichtung (4), die wenigstens zwei Antriebsmodule (5) in einer Anordnung (5`) aufweist, wobei jedes Antriebsmodul (5) zu einer magnetischen Levitation (6) zumindest einer Transporteinheit (7) eingerichtet ist, **dadurch gekennzeichnet, dass** jedes Antriebsmodul (5) auf einer Kopplungsseite (9) mit einem Versiegelungselement (10) abgedeckt ist und dass benachbarte Antriebsmodule (5) in einem Dichtbereich (12) gegeneinander abdichten.

2. Kontrollierte Umgebung (1) nach Anspruch 1, **dadurch gekennzeichnet, dass** der Dichtbereich (12) wenigstens ein Dichtelement (13) aufweist und/oder dass der Dichtbereich (12) und/oder das Versiegelungselement (10) aus oder mit einem H2O2-resistenten Material (14`) ausgebildet ist.

3. Kontrollierte Umgebung (1) nach einem der vorangehenden Ansprüche, **dadurch gekennzeichnet, dass** der Dichtbereich (12) einstückig an dem Versiegelungselement (10) ausgebildet ist und/oder dass der Dichtbereich (12) wenigstens zwei Versiegelungselemente (10), vorzugsweise wenigstens vier oder eine Vielzahl von Versiegelungselementen (10), vorzugsweise maschenartig, miteinander verbindet.

4. Kontrollierte Umgebung (1) nach einem der vorangehenden Ansprüche, **dadurch gekennzeichnet, dass** benachbarte Versiegelungselemente (10) voneinander getrennt sind und/oder dass der Dichtbereich (12) eine Abdichtung (17) der kontrollierten Umgebung (1) nach außen definiert.

5. Kontrollierte Umgebung (1) nach einem der vorangehenden Ansprüche, **dadurch gekennzeichnet, dass** wenigstens ein Antriebsmodul (5) der Anordnung (5`) einen dichten Anschluss (18) an eine Begrenzungswand (19) der kontrollierten Umgebung (1) bildet und/oder dass das Versiegelungselement (10) die Kopplungsseite (9) des Antriebsmoduls (5) zumindest zu 60%, vorzugsweise vollständig, bedeckt.

6. Kontrollierte Umgebung (1) nach einem der vorangehenden Ansprüche, **dadurch gekennzeichnet, dass** das Versiegelungselement (10) und/oder der Dichtbereich (12) flächig oder linienförmig ausgebildet ist und/oder dass der Dichtbereich (12) entlang eines Randes (26) des Versiegelungselements (10) geschlossen umlaufend ausgebildet ist.

7. Kontrollierte Umgebung (1) nach einem der vorangehenden Ansprüche, **dadurch gekennzeichnet, dass** der Dichtbereich (12) die Anordnung (5`) von Antriebsmodulen (5) umlaufend umschließt und gegen die oder eine Begrenzungswand (19) abdichtet und/oder dass der Dichtbereich (12) wenigstens ein Versiegelungselement (10) kontaktiert.

8. Kontrollierte Umgebung (1) nach einem der vorangehenden Ansprüche, **dadurch gekennzeichnet, dass** das Versiegelungselement (12) unlösbar und/oder stoffschlüssig mit dem Antriebsmodul (5) verbunden ist und/oder dass das Versiegelungselement (10) flexibel ausgebildet ist.

9. Kontrollierte Umgebung (1) nach einem der vorangehenden Ansprüche, **dadurch gekennzeichnet, dass** das Versiegelungselement (10) um eine Kante (21) des Antriebsmoduls (5) oder um alle die Kopplungsseite (9) berandenden Kanten (21), geführt ist und/oder dass das Versiegelungselement (10) starr ist.

10. Kontrollierte Umgebung (1) nach einem der vorangehenden Ansprüche, **dadurch gekennzeichnet, dass** die zwei Antriebsmodule (5) nicht weiter voneinander entfernt ausgebildet sind, als dass die darauf betriebene Transporteinheit (7) übergangslos levitierbar und/oder verfahrbar ist.

11. Kontrollierte Umgebung (1) nach einem der vorangehenden Ansprüche, **dadurch gekennzeichnet, dass** zumindest eine Prozessstation (25) in der kontrollierten Umgebung (1) angeordnet ist und/oder dass zumindest ein Abschnitt der Prozessstation (25), insbesondere wenigstens eine Füllnadel, höher als wenigstens eines der Antriebsmodule (5) angeordnet ist.

12. Verwendung von Spannmitteln zum kraft- und/oder formschlüssigen Verbinden wenigstens zweier benachbarter Antriebsmodule (5) einer kontrollierten Umgebung (1), vorzugsweise Containments (3) oder Isolators (2), insbesondere nach einem der vorangehenden Ansprüche, insbesondere wobei der oder ein Dichtbereich (12) komprimiert wird.

13. Verwendung wenigstens eines Dichtelements (13) in einem Dichtbereich (12) zu einer Abdichtung benachbarter levitierender Antriebsmodule (5) einer kontrollierten Umgebung (1), insbesondere nach einem der vorangehenden Ansprüche, gegeneinander.

14. Verwendung einer Transporteinheit (7) zum levitierten Überfahren eines ein Antriebsmodul (5) einer kontrollierten Umgebung (1), insbesondere einer kontrollierten Umgebung (1) nach einem der vorangehenden Ansprüche, abdeckenden Versiegelungselements (10) und/oder eines vorzugsweise daran angrenzenden Dichtbereichs (12), wobei in dem Dichtbereich (12) benachbarte Antriebsmodule (5) einer Transportvorrichtung (4) der kontrollierten Umgebung (1) gegeneinander abdichten.

## Geänderte Patentansprüche

### Geänderte Patentansprüche gemäss Regel 137(2) EPÜ.

1. Kontrollierte Umgebung (1), insbesondere Containment (3) oder Isolator (2), mit einer Transportvorrichtung (4), die wenigstens zwei Antriebsmodule (5) in einer Anordnung (5') aufweist, wobei jedes Antriebsmodul (5) zu einer magnetischen Levitation (6) zumindest einer Transporteinheit (7) eingerichtet ist, **dadurch gekennzeichnet, dass** jedes Antriebsmodul (5) auf einer Kopplungsseite (9) mit einem Versiegelungselement (10) abgedeckt ist und dass benachbarte Antriebsmodule (5) in einem Dichtbereich (12) gegeneinander abdichten.

2. Kontrollierte Umgebung (1) nach Anspruch 1, **dadurch gekennzeichnet, dass** der Dichtbereich (12) wenigstens ein Dichtelement (13) aufweist und/oder dass der Dichtbereich (12) und/oder das Versiegelungselement (10) aus oder mit einem H2O2-resistenten Material (14') ausgebildet ist.

3. Kontrollierte Umgebung (1) nach einem der vorangehenden Ansprüche, **dadurch gekennzeichnet, dass** der Dichtbereich (12) einstückig an dem Versiegelungselement (10) ausgebildet ist und/oder dass der Dichtbereich (12) wenigstens zwei Versiegelungselemente (10), vorzugsweise wenigstens vier oder eine Vielzahl von Versiegelungselementen (10), vorzugsweise maschenartig, miteinander verbindet.

4. Kontrollierte Umgebung (1) nach einem der vorangehenden Ansprüche, **dadurch gekennzeichnet, dass** benachbarte Versiegelungselemente (10) voneinander getrennt sind und/oder dass der Dichtbereich (12) eine Abdichtung (17) der kontrollierten Umgebung (1) nach außen definiert.

5. Kontrollierte Umgebung (1) nach einem der vorangehenden Ansprüche, **dadurch gekennzeichnet, dass** wenigstens ein Antriebsmodul (5) der Anordnung (5') einen dichten Anschluss (18) an eine Begrenzungswand (19) der kontrollierten Umgebung (1) bildet und/oder dass das Versiegelungselement (10) die Kopplungsseite (9) des Antriebsmoduls (5) zumindest zu 60%, vorzugsweise vollständig, bedeckt.

6. Kontrollierte Umgebung (1) nach einem der vorangehenden Ansprüche, **dadurch gekennzeichnet, dass** das Versiegelungselement (10) und/oder der Dichtbereich (12) flächig oder linienförmig ausgebildet ist und/oder dass der Dichtbereich (12) entlang eines Randes (26) des Versiegelungselements (10) geschlossen umlaufend ausgebildet ist.

7. Kontrollierte Umgebung (1) nach einem der vorangehenden Ansprüche, **dadurch gekennzeichnet, dass** der Dichtbereich (12) die Anordnung (5') von Antriebsmodulen (5) umlaufend umschließt und gegen die oder eine Begrenzungswand (19) abdichtet und/oder dass der Dichtbereich (12) wenigstens ein Versiegelungselement (10) kontaktiert.

8. Kontrollierte Umgebung (1) nach einem der vorangehenden Ansprüche, **dadurch gekennzeichnet, dass** das Versiegelungselement (12) unlösbar und/oder stoffschlüssig mit dem Antriebsmodul (5) verbunden ist und/oder dass das Versiegelungselement (10) flexibel ausgebildet ist.

9. Kontrollierte Umgebung (1) nach einem der vorangehenden Ansprüche, **dadurch gekennzeichnet, dass** das Versiegelungselement (10) um eine Kante (21) des Antriebsmoduls (5) oder um alle die Kopplungsseite (9) berandenden Kanten (21), geführt ist und/oder dass das Versiegelungselement (10) starr ist.

10. Kontrollierte Umgebung (1) nach einem der vorangehenden Ansprüche, **dadurch gekennzeichnet, dass** die zwei Antriebsmodule (5) nicht weiter voneinander entfernt ausgebildet sind, als dass die darauf betriebene Transporteinheit (7) übergangslos levitierbar und/oder verfahrbar ist.

11. Kontrollierte Umgebung (1) nach einem der vorangehenden Ansprüche, **dadurch gekennzeichnet, dass** zumindest eine Prozessstation (25) in der kontrollierten Umgebung (1) angeordnet ist und/oder dass zumindest ein Abschnitt der Prozessstation (25), insbesondere wenigstens eine Füllnadel, höher als wenigstens eines der Antriebsmodule (5) angeordnet ist.

12. Verwendung von Spannmitteln zum kraft- und/oder formschlüssigen Verbinden wenigstens zweier benachbarter Antriebsmodule (5) einer kontrollierten Umgebung (1), vorzugsweise Containments (3) oder Isolators (2), nach einem der vorangehenden Ansprüche, insbesondere wobei der oder ein Dichtbereich (12) komprimiert wird.

13. Verwendung wenigstens eines Dichtelements (13) in einem Dichtbereich (12) zu einer Abdichtung benachbarter levitierender Antriebsmodule (5) einer kontrollierten Umgebung (1) nach einem der vorangehenden Ansprüche, gegeneinander.

14. Verwendung einer Transporteinheit (7) zum levitierten Überfahren eines ein Antriebsmodul (5) einer kontrollierten Umgebung (1), insbesondere einer kontrollierten Umgebung (1) nach einem der vorangehenden Ansprüche, abdeckenden Versiegelungselements (10) und/oder eines vorzugsweise daran angrenzenden Dichtbereichs (12), wobei in dem Dichtbereich (12) benachbarte Antriebsmodule (5) einer Transportvorrichtung (4) der kontrollierten Umgebung (1) gegeneinander abdichten.
